# EUROPÄISCHE PATENTSCHRIFT

(11) **EP 0 940 905 B1**
(45) Veröffentlichungstag und Bekanntmachung des Hinweises auf die Patenterteilung: **07.05.2003**
(21) Anmeldenummer: 99102158.5
(22) Anmeldetag: 03.02.1999
(51) Int. Cl.: H02K 5/08, H02K 3/50

(54) **Elektromotor und Vorrichtung zur Herstellung**
Electromotor and device for the manufacturing
Moteur électrique et dispositif de fabrication

(30) Priorität: 02.03.1998 DE 19808659
(43) Veröffentlichungstag der Anmeldung: 08.09.1999
(73) Patentinhaber: Telair International GmbH, 83734 Hausham (DE)
(72) Erfinder: Hilbrand, Bernhard, 82024 Taufkirchen (DE); Maier, Stefan, 83727 Schliersee (DE)
(74) Vertreter: Bohnenberger, Johannes, Dr.

(56) Entgegenhaltungen:
- US-A- 4 585 966
- US-A- 5 183 150
- US-A- 5 644 178
- PATENT ABSTRACTS OF JAPAN vol. 008, no. 063 (E-233), 24. März 1984 & JP 58 212351 A (MATSUSHITA DENKI SANGYO KK), 10. Dezember 1983

## Beschreibung

Die Erfindung betrifft einen Elektromotor für eine Antriebsrolleneinheit zum Befördern von Gegenständen im Frachtraum eines Flugzeugs sowie eine Vorrichtung zur Herstellung eines solchen Elektromotors.

Bei Wicklungen von induktiven Bauelementen, die elektrische in mechanische Energie umsetzen, insbesondere bei Elektromotoren oder Aktuatoren, besteht oftmals das Problem, daß eindringende Feuchtigkeit zu Schäden führen kann. Ganz besonders gilt dies bei Bauelementen, die in Flugzeugen verwendet werden und dort insbesondere im Frachtraum. In einem solchen Frachtraum sind üblicherweise Antriebsrolleneinheiten zum Befördern von Containern oder anderen Gütern vorgesehen, wie sie zum Beispiel in der DE 42 24 818 C2 beschrieben sind. Derartige Antriebsrolleneinheiten sind allerhöchsten Belastungen ausgesetzt. Dabei muß an allen Punkten an Gewicht gespart werden, so daß aufwendige Gehäuse, welche darüber hinaus Reparaturen erschweren, nicht gerne gesehen werden.

Es ist nun bekannt, den Stator eines Elektromotors (oder die Wicklung eines Aktuators) zu vergießen, wobei zum Beispiel LCP (liquid crystal polymer)-Thermoplaste verwendet werden. Die Dichtigkeit und Homogenität des Vergusses sind jedoch nicht befriedigend.

Aus der US-A-4585966 ist ein Elektromotor bekannt, dessen Stator unter Umhüllung der Statorwicklung mit einem Kunststoffmaterial als Gußmasse vergossen ist. Die Anschlussdrähte der Statorwicklung sind auf einen Stecker geführt, der mit eingegossen ist. Derartige Steckkontakte sind jedoch bekanntlich verschleißgefährdet und korrodieren insbesondere in einer feuchten Umgebung.

Der Erfindung liegt die Aufgabe zugrunde, einen Elektromotor sowie eine Vorrichtung bzw. ein Verfahren zur Herstellung eines solchen derart aufzuzeigen, daß insbesondere eine Antriebsrolleneinheit zum Befördern von Gegenständen im Frachtraum eines Flugzeugs eine erhöhte Belastbarkeit bei erleichterten Herstellungs- und Reparaturmöglichkeiten bietet.

Diese Aufgabe wird durch einen Elektromotor nach Anspruch 1 bzw. eine Vorrichtung zur Herstellung eines solchen nach Anspruch 2 gelöst.

Ein wesentlicher Punkt der Erfindung liegt darin, daß der Stator im Vakuum mit einer Vergußmasse vergossen ist und gleichzeitig ein Stopfen mit durchgeführten Anschlußdrähten abschnittsweise mit eingegossen ist. Dieser Stopfen kann nun gleichzeitig dazu dienen, ohne größeren Aufwand eine Gehäusedurchführung zu bilden, die wiederum flüssigkeitsdicht ist. Dies vereinfacht die Montage und den Gesamtaufbau eines Elektromotors erheblich.

Es weist der Stopfen eine Vielzahl separater Bohrungen auf, durch welche jeweils ein Anschlußdraht einzeln unter Abdichtung hindurchgeführt ist. Dadurch wird nicht nur die Dichtigkeit erhöht, es wird vielmehr auch gleichzeitig eine ganz wesentliche Verbesserung der Betriebssicherheit erreicht. Es kann nämlich nicht geschehen, daß - wie bei Tüllen sonst üblich - die Anschlußdrähte eng nebeneinander liegen und durch die insbesondere in Flugzeugen heftigen und ständigen Vibrationen gegeneinander scheuern, was zu Kurzschlüssen führen kann. Die Zugentlastung wird durch diese Maßnahme weiterhin erheblich verbessert.

Hierbei sind der Stopfen und/oder die Anschlußdrähte bzw. deren Isoliermäntel derart elastisch ausgebildet, daß beim Durchziehen der Anschlußdrähte durch den Stopfen eine elastische Verformung zur erhöhten Dichtsicherheit bewirkt wird. Diese Elastizität bewirkt gleichermaßen eine verbesserte Vibrationsfestigkeit und Zugentlastung.

Bei der erfindungsgemäßen Vorrichtung gemäß Anspruch 2 wird es als wesentlich betrachtet, daß der Stopfen, der wie oben beschrieben beim fertigen Elektromotor ganz bestimmte Funktionen vorteilhafterweise ausübt, zum Abdichten gegenüber der extrem dünnflüssigen Vergußmasse beim Vergießen dient. Es wird hier nämlich im Vakuum mit einem Zweikomponenten-Harz gearbeitet, das mit erhöhter Temperatur (Verarbeitungstemperatur etwa 70 bis 100 °C) vergossen wird und aufgrund dieser Tatsache äußerst dünnflüssig ist. Durch diese Dünnflüssigkeit ist einerseits gewährleistet, daß die Wicklungen bzw. Einzeldrähte der Wicklungen optimal eingebettet werden. Andererseits birgt aber eine derart dünnflüssige Vergußmasse die Gefahr in sich, daß sie (ohne den erfindungsgemäß ausgebildeten Stopfen) einen undefinierten Mantel um die Anschlußdrähte bildet. Darüber hinaus formt der Stopfen die Anschlußdrähte bzw. führt sie derart, daß sie nirgends freiliegen bzw. aus der Vergußmasse herausragen. Nach dem Vergießen erfolgt eine Aushärtung bei etwa 130 °C während eines Zeitraums von ca. 8 Stunden.

Die Durchführungsöffnung ist vorzugsweise derart ausgebildet, daß der Stopfen mit einem unteren Endabschnitt in den Vergußraum so ragt, daß er in der Vergußmasse nach deren Erstarren gehalten wird. Dadurch wird jeder einzelne Anschlußdraht sicher geführt.

Bevorzugte Ausführungsformen der Erfindung ergeben sich aus den Unteransprüchen und der nachfolgenden Beschreibung von Ausführungsbeispielen, die anhand von Abbildungen näher erläutert werden. Hierbei zeigen
- Fig. 1: einen Stator in einem Teil-Längsschnitt,
- Fig. 2: eine Form zur Herstellung eines Stators im Längsschnitt,
- Fig. 3: eine Draufsicht auf die Form gemäß Fig. 2.

In der nachfolgenden Beschreibung werden für gleiche und gleichwirkende Teile dieselben Bezugsziffern verwendet.

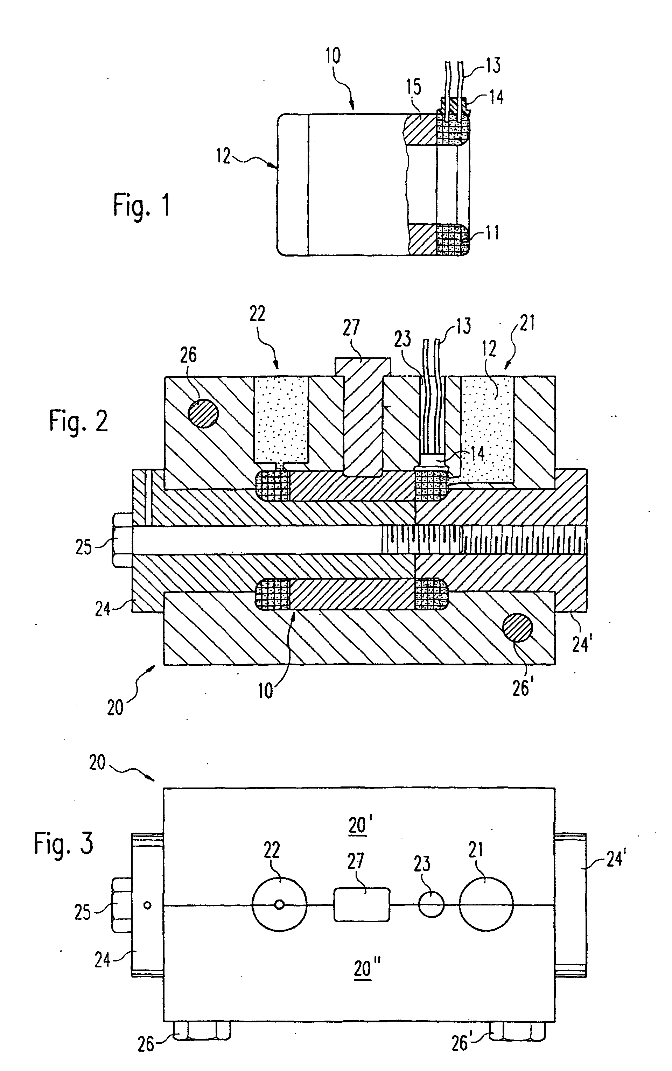

Der in Fig. 1 gezeigte Stator 10 weist in an sich bekannter Weise einen glatten Metallkern 15 oder einen Metallkern mit eingefrästen Nuten (nicht gezeigt) auf, in welche Statorwicklungen 11 eingesetzt sind. Die Enden der Wicklungsdrähte der Wicklung 11 sind mit (kunststoffummantelten bzw. -isolierten) Anschlußdrähten 13 verbunden, die durch Einzelbohrungen eines Stopfens 14 aus elastischem Kunststoffmaterial herausgeführt sind. Der elastische Stopfen 14 aus Kunststoffmaterial ist mit in die Vergußmasse 12 eingegossen, welche die Wicklung 11 (in Fig. 1 bei ungeschnittener Ansicht) so überdeckt, daß keiner der die Statorwicklung 11 bildenden Drähte freiliegt.

Die in den Figuren 2 und 3 gezeigte Form 20 zum Eingießen umfaßt oben liegende Vergußmasseneinfüllöffnungen 21 und 22 sowie eine zwischen diesen Öffnungen 21 und 22 liegende Durchführungsöffnung 23. Sie besteht aus 2 Formhälften 20', 20'', die über Formverschlußbolzen 26, 26' miteinander verbindbar sind. Nach dem Einsetzen eines Stators 10 und Justierung des Stators 10 mittels eines Justierzapfens 27 wird ein zweistückiger Kern 24, 24' eingesetzt, der mittels eines Kernbolzens 25 zusammengespannt wird. Dadurch bleibt ein Hohlraum übrig, in welchem der Stator 10 mit seinem Außenmantel eng sitzt, wobei sein Innenumfang durch den Kern 24, 24' ebenfalls dicht abgeschlossen ist. Die Statorwicklung befindet sich dann in Hohlräumen derart, daß keiner der Wicklungsdrähte ein Formteil berührt. Diese Hohlräume stehen über Leitungsstückchen mit den Vergußmasseneinfüllöffnungen 21, 22 in Verbindung.

Die Anschlußdrähte 23 des Stators 10 sind durch einzelne, voneinander beabstandete Bohrungen eines Stopfens 14 geführt, der unter Abdichtung in der Durchführöffnung 23 sitzt. Wenn also das eigentliche Vergießen stattfindet, so kann die Vergußmasse nicht durch den Stopfen 14 in die Durchführungsöffnung 23 eindringen, so daß die Anschlußdrähte 13 sauber, ohne Verschmutzung durch Vergußmasse auch nach dem Vergießen bleiben und die in Fig. 1 gezeigte Anordnung entsteht.

### Bezugszeichenliste

- 10: stator
- 11: Statorwicklung
- 12: Vergußmasse
- 13: Anschlußdraht
- 14: Stopfen
- 15: Metallkern
- 20: Form
- 20', 20'': Formhälften
- 21: Vergußmasseneinfüllöffnung
- 22: Vergußmasseneinfüllöffnung
- 23: Durchführöffnung
- 24, 24': Kern
- 25: Kernbolzen
- 26, 26': Formverschlußbolzen
- 27: Justierzapfen

## Patentansprüche

1. Elektromotor für eine Antriebsrolleneinheit zum Befördern von Gegenständen im Frachtraum eines Flugzeugs mit einem Elektromotor zum Antreiben einer Antriebsrolle, der einen Stator (10) aufweist,
wobei der Stator (10) unter Umhüllung der Statorwicklung (11) vorzugsweise im Vakuum mit einem Kunststoffmaterial als Vergußmasse (12) vergossen ist, wobei Anschlußdrähte (13) der Statorwicklung (11) durch einen abschnittsweise miteingegossenen Stopfen (14) aus der Vergußmasse (12) herausgeführt sind, wobei der Stopfen (14) eine Vielzahl separater Bohrungen aufweist, durch welche jeweils ein Anschlußdraht (13) einzeln unter Abdichtung hindurchgeführt ist und wobei der Stopfen (14) und/oder die Anschlußdrähte (13) bzw. deren Isoliermäntel derart elastisch ausgebildet sind, daß beim Durchziehen der Anschlußdrähte (13) durch den Stopfen (14) eine elastische Verformung zur erhöhten Dichtsicherheit bewirkt wird.

2. Vorrichtung zur Herstellung eines Elektromotors nach Anspruch 1, umfassend vorzugsweise eine Vakuumkammer und eine darin aufnehmbare Form (20) mit Hohlräumen zur Aufnahme des Stators (10), die derart geformt sind, daß Endabschnitte einer Statorwicklung (11) im wesentlichen frei in Vergußräume ragen, daß die Vergußräume mit oben liegenden Vergußmassen-Einfüllöffnungen (21, 22) in Verbindung stehen und daß eine oben liegende Anschlußdraht-Durchführungsöffnung (23) im Bereich eines Endabschnitts vorgesehen und derart ausgebildet ist, daß ein Dichtstopfen (14) zur Durchführung der Anschlußdrähte (13) in die Durchführungsöffnung (23) derart einsetzbar ist, daß beim Füllen der Vergußräume ein Einlaufen von Vergußmasse (12) in die Durchführungsöffnung (23) verhindert wird.

3. Vorrichtung nach Anspruch 2,
**dadurch gekennzeichnet,**
**daß** die Durchführungsöffnung (23) derart ausgebildet ist, daß der Stopfen (14) mit einem unteren Endabschnitt in den Vergußraum so ragt, daß er in der Vergußmasse (12) nach deren Erstarren gehalten wird.

## Claims

1. An electric motor for a drive roller unit for conveying articles in the cargo space of an aircraft, with an electric motor for driving a drive roller, which has stator (10), wherein the stator (10) is cast, with the stator winding (11) being encapsulated, preferably in a vacuum with a plastics material as sealing compound (12), wherein connecting wires (13) of the stator winding (11) extend out of the sealing compound (12) through a plug (14) cast integrally therewith in sections, wherein the plug (14) has a plurality of separate bores through which each individual connecting wire (13) passes in a sealed manner, and wherein the plug (14) and/or the connecting wires (13) or their insulating sheaths are formed elastically so that upon drawing the connecting wires (13) through the plug (14) an elastic deformation is induced for increased sealing reliability.

2. An apparatus for producing an electric motor according to Claim 1, preferably comprising a vacuum chamber and a mould (20) which can be accommodated therein and having cavities to receive the stator (10), which are so shaped that end portions of the stator winding (11) project substantially freely into casting chambers, that the casting chambers are in communication with upwardly situated sealing compound inlet openings (21,22), and that an upwardly situated connecting wire passage opening (23) is provided in the vicinity of an end portion and is so formed that a sealing plug (14) for the passage of the connecting wires (13) can be inserted into the passage opening so that, when the casting chambers are being filled, sealing compound (12) is prevented from flowing into the passage opening (23).

3. An apparatus according to Claim 2, **characterised in that** the passage opening (23) is formed in such a way that the plug (14) projects with a lower end portion into the casting chamber so that it is retained in the sealing compound (12) after it has set.

## Revendications

1. Moteur électrique, pour une unité à rouleaux d'entraînement destinée au convoyage d'objets dans la soute d'un avion, comportant un moteur électrique destiné à entraîner un rouleau d'entraînement, qui présente un stator (10), le stator (10) entouré par la bobine de stator (11) étant moulé de préférence sous vide, dans une matière plastique en tant que masse à mouler (12), des fils de connexion (13) de la bobine de stator (11) étant tirés hors de la masse à mouler (12) à travers un bouchon (14) simultanément moulé par sections, le bouchon (14) présentant une pluralité de trous séparés, par lesquels est tiré respectivement un fil de connexion (13) isolément de manière étanche, et le bouchon (14) et/ou les fils de connexion (13) ou leurs gaines isolantes étant réalisés de manière élastique telle que, lors du passage des fils de connexion (13) à travers les bouchons (14), il s'opère une déformation élastique aux fins d'une sûreté d'étanchéité accrue.

2. Dispositif de fabrication d'un moteur électrique selon la revendication 1, comprenant de préférence une chambre à vide, et une forme (20) pouvant y être logée comportant des espaces creux pour recevoir le stator (10) qui sont formés de manière telle que des sections d'extrémité d'une bobine de stator (11) pénètrent essentiellement librement dans des espaces de moulage, en ce que les espaces de moulage sont en liaison avec des orifices de remplissage de masses moulées (21, 22) situés en haut et en ce qu'un orifice de passage de fil de connexion (23) est prévu dans la zone d'une section d'extrémité et est conformé de manière telle que, pour le passage des fils de connexion (13), un bouchon d'étanchéité (14) peut être inséré dans l'orifice de passage (23) de manière telle que, lors du remplissage des espaces de moulage, une pénétration de masse à mouler (12) dans l'orifice de passage (23) est empêchée.

3. Dispositif selon la revendication 2,
**caractérisé en ce que**
l'orifice de passage (23) est conformé de manière telle que le bouchon (14), par une section d'extrémité inférieure, pénètre dans l'espace de moulage de manière telle qu'il est maintenu dans la masse à mouler (12) après la solidification de celle-ci.
